# EUROPÄISCHE PATENTSCHRIFT

(11) **EP 3 519 209 B1**
(45) Veröffentlichungstag und Bekanntmachung des Hinweises auf die Patenterteilung: **05.08.2020**
(21) Anmeldenummer: 17735426.3
(22) Anmeldetag: 26.06.2017
(51) Int. Cl.: B60C 13/00, B60C 13/02

(54) **FAHRZEUGREIFEN**
VEHICLE TIRE
PNEUMATIQUE DE VÉHICULE

(30) Priorität: 27.09.2016 DE 102016218486
(43) Veröffentlichungstag der Anmeldung: 07.08.2019
(73) Patentinhaber: Continental Reifen Deutschland GmbH, 30165 Hannover (DE)
(72) Erfinder: RITTWEGER, Stefan, 30826 Garbsen (DE)
(74) Vertreter: Finger, Karsten
(86) Internationale Anmeldenummer: PCT/EP2017/065657
(87) Internationale Veröffentlichungsnummer: WO 2018/059751

(56) Entgegenhaltungen:
- WO-A1-2016/067855
- JP-A- 2011 116 306
- US-A1- 2010 000 649

## Beschreibung

Die Erfindung betrifft einen Fahrzeugreifen mit einer Seitenwand mit einer dekorativen Seitenwandschraffur aus zumindest einer Schraffurfläche, welche zwei voneinander unterschiedlich gestaltete Typen von Schraffurflächenteilen, einen ersten Typ Schraffurflächenteil und einen zweiten Typ Schraffurflächenteil, aufweist, wobei in jedem Schraffurflächenteil eine Vielzahl von nebeneinander, insbesondere parallel zueinander verlaufenden, im Querschnitt im Wesentlichen dreieckigen Erhebungen vorgesehen ist, wobei im ersten Typ Schraffurflächenteil die Erhebungen mit einer Dichte verlaufen, die geringer ist als die Dichte der Erhebungen im zweiten Schraffurflächenteil, wobei die Erhebungen im ersten Typ Schraffurflächenteil unter einem Winkel von mindestens 45° zu den Erhebungen im zweiten Typ Schraffurflächenteil verlaufen und wobei die Erhebungen Seitenflanken aufweisen, welche an den Erhebungen im zweiten Typ Schraffurflächenteil zu einer Senkrechten auf die Seitenwand unter einem kleineren Winkel verlaufen als an den Erhebungen im ersten Typ Schraffurflächenteil.

Seitenwandschraffuren als gestalterische Maßnahmen auf Seitenwänden von Fahrzeugreifen sind schon lange bekannt, weit verbreitet und immer wieder Gegenstand von Patentanmeldungen und Patenten.

Ein Fahrzeugreifen der eingangs genannten Art ist beispielsweise aus der WO 2016/067855 A1 bekannt. Die Seitenwandschraffur dieses Fahrzeugreifens weist eine Vielzahl von Schraffurflächenteilen auf, wobei ein erster Typ Schraffurflächenteil und ein zweiten Typ Schraffurflächenteil vorgesehensind, in welchen jeweils eine Vielzahl von parallel zueinander, in Draufsicht zick-zack-förmig verlaufenden Erhebungen vorgesehen ist, wobei die Erhebungen im ersten Typ Schraffurflächenteil dichter nebeneinander verlaufen als im zweiten Typ Schraffurflächenteil. Die Erhebungen weisen, im Querschnitt betrachtet, jeweils die Gestalt eines gleichschenkeligen Dreiecks mit abgeflachter Spitze auf.

Ferner ist aus der DE 10 2013 108 786 A1 ein Fahrzeugreifen mit einer Seitenwand mit einem Seitenwanddekor bekannt, welches eine Basisschraffur aus einer Vielzahl von nebeneinander, insbesondere parallel zueinander, verlaufenden Erhebungen aufweist, wobei die Erhebungen aus der Basisschraffur unter übereinstimmend großen Winkeln abgelenkte Abschnitte aufweisen, sodass derart örtlich begrenzte Schraffurflächen gebildet sind. Dabei können die abgelenkten Abschnitte durch nochmaliges, unter übereinstimmend großen Winkeln erfolgtes Ablenken in zumindest eine weitere Schraffurfläche übergehen. Auf diese Weise können Schraffurflächen gebildet werden, die Mantelflächen geometrischer Körper, beispielsweise Pyramidenflächen, simulieren bzw. darstellen.

Der Erfindung liegt die Aufgabe zugrunde, Schraffurflächen auf Seitenwänden derart zu gestalten, dass die unterschiedlichen Typen von Schraffurflächenteilen einen wesentlich größeren Kontrast zueinander aufweisen und insbesondere auf deutlich unterschiedliche Weise Licht reflektieren bzw. absorbieren.

Gelöst wird die gestellte Aufgabe erfindungsgemäß dadurch, dass im zweiten Typ Schraffurflächenteil die Erhebungen eine um mindestens 0,1 mm größere Höhe aufweisen als die Erhebungen im ersten Typ Schraffurflächenteil.

Die Schraffurflächenteile mit der größeren Dichte an Erhebungen, dem kleineren Winkel ihrer Seitenflanken zur Senkrechten auf die Seitenwand und der größeren Höhe absorbieren im Vergleich zu den Erhebungen im anderen Typ Schraffurflächenteil wesentlich mehr Licht und können tiefschwarz erscheinen. Die Kombination solcher Schraffurflächenteile in einer Schraffurfläche erlaubt es daher, dekorative Flächenelemente oder Beschriftungen auf Seitenwänden von Reifen wesentlich kontrastreicher als bislang auszugestalten und dadurch deren Erkennbarkeit deutlich zu steigern.

Bei einer bevorzugten Ausführungsform der Erfindung ist der Winkel der Seitenflanken der Erhebungen im zweiten Typ Schraffurflächenteil relativ zur Senkrechten auf die Seitenwand um mindestens 10° kleiner als der Winkel der Seitenflanken der Erhebungen im ersten Typ Schraffurflächenteil. Je steiler die Seitenflanken der Erhebungen im zweiten Typ Schraffurflächenteil sind, umso mehr Licht wird absorbiert und umso höher ist daher der Kontrast der beiden Typen von Schraffurflächenteilen zueinander. Besonders bevorzugt ist daher auch eine Ausführung, bei der der Winkel der Seitenflanken der Erhebungen relativ zur Senkrechten auf die Seitenwand im zweiten Typ Schraffurflächenteil 15° bis 30° beträgt. Die Schraffurflächenteile vom ersten Typ können relativ hell erscheinen. Gemäß der Erfindung ist es daher vorteilhaft, wenn der Winkel der Seitenflanken der Erhebungen relativ zur Senkrechten auf die Seitenwand im ersten Typ Schraffurflächenteil 35° bis 50° beträgt.

Auch der gegenseitige Abstand der Erhebungen in den beiden Typen von Schraffurflächenteilen hat Auswirkungen auf die Kontrastwirkung zwischen diesen Schraffurflächenteilen. Besonders vorteilhaft ist es, wenn die Erhebungen im zweiten Typ Schraffurflächenteil an ihrer Basis entweder unmittelbar aneinander anschließen oder einen gegenseitigen Abstand von bis zu 0,3 mm aufweisen. Die Erhebungen im ersten Typ Schraffurflächenteil können ebenfalls an ihrer Basis unmittelbar aneinander anschließen, weisen jedoch bevorzugt einen gegenseitigen Abstand von bis zu 0,5 mm auf, wobei ihr gegenseitiger Abstand bei einer bevorzugten Ausführung um 0,1 mm größer ist als der gegenseitige Abstand der Erhebungen im zweiten Typ Schraffurflächenteil.

Wie bereits erwähnt weisen die Erhebungen im zweiten Typ Schraffurflächenteil eine größere Höhe auf, als die Erhebungen im ersten Typ Schraffurflächenteil. Die Höhe der Erhebungen in den beiden Typen von Schraffurflächenteilen kann deutlich unterschiedlich sein. So können die Erhebungen im zweiten Typ Schraffurflächenteil eine Höhe von bis zu 0,8 mm aufweisen, die Erhebungen im ersten Typ Schraffurflächenteil von 0,15 mm bis 0,6 mm.

Der Kontrast zwischen den beiden Typen von Schraffurflächenteilen innerhalb einer Schraffurfläche wird auch vom Winkel, der zwischen Erstreckungsrichtungen der Erhebungen im ersten Typ Schraffurflächenteil und den Erhebungen im zweiten Typ Schraffurflächenteil vorliegt, beeinflusst. Bevorzugterweise beträgt dieser Winkel bis zu 135°, insbesondere in der Größenordnung von 90°.

Eine Schraffurfläche aus den beiden Typen von Schraffurflächenteilen kann nahezu beliebig gestaltet werden und enthält zumindest einen Schraffurflächenteil des ersten Typs und zumindest einen Schraffurflächenteil des zweiten Typs.

Weitere Merkmale, Vorteile und Einzelheiten der Erfindung werden nun anhand der Zeichnung, die schematisch Ausführungsbeispiele der Erfindung darstellt, näher beschrieben. Dabei zeigen
Fig. 1 eine Ansicht eines Umfangsabschnittes einer Seitenwand eines Fahrzeugluftreifens mit einer Ausführungsvariante der Erfindung und
Fig. 2 einen Schnitt entlang der Linie II-II der Fig. 1.

Auf den Seitenwänden von Fahrzeugreifen sind üblicherweise die vorgeschriebenen Angaben, wie die Reifendimension, der Speedindex, der Hersteller, der Verwendungszweck (Sommer-/Winterreifen) und dergleichen angegeben. Diese Angaben befinden sich meist auf glatten Flächenbereichen der Seitenwände. Es verbleibt einiges an Freiflächen auf den Seitenwänden, auf welchen Dekorelemente oder mit Dekorelementen ausgestaltete Schriftzüge angebracht werden können, üblicherweise als Schraffuren, die einen gewissen Kontrast zu den glatten Flächenbereichen der Seitenwände aufweisen und in der Lage sind, etwaige konstruktionsbedingte Unebenheiten auf Seitenwänden zu kaschieren. Als Schraffuren werden üblicherweise Gestaltungselemente auf der Seitenwand von Reifen bezeichnet, die sich jeweils aus einer Vielzahl von insbesondere parallel zueinander verlaufenden Erhebungen zusammensetzen.

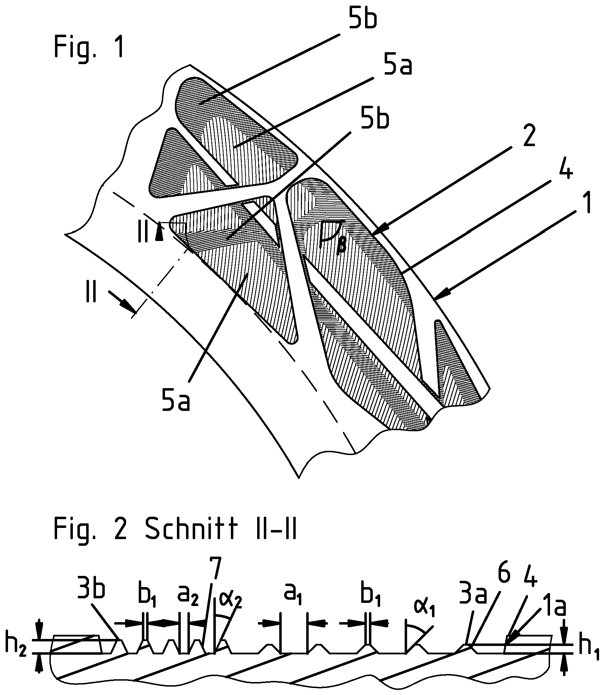

Fig. 1 zeigt einen Umfangsabschnitt einer Seitenwand 1, auf welchem mehrere Schraffurflächen 2 ausgebildet sind. Die Schraffurflächen 2 befinden sich in seichten, vorzugsweise 0,4 mm bis 0,8 mm tiefen Vertiefungen 1a (Fig. 2), die in der Seitenwand 1 ausgebildet sind. Die Vertiefungen 1a sind am Niveau der von Schraffurflächen 2 freien Bereichen der Seitenwand 1 von Kanten 4 umlaufen bzw. begrenzt, die den Schraffurflächen 2 ihre äußere Gestalt verleihen.

Jede Schraffurfläche 2 besteht aus zwei Typen von Schraffurflächenteilen 5a, 5b, wobei jeder Typ Schraffurflächenteil 5a von parallel zueinander verlaufenden Erhebungen 3a, wie noch näher beschrieben wird, gebildet wird, jeder Typ Schraffurflächenteil 5b von parallel zueinander verlaufenden Erhebungen 3b, wie ebenfalls noch näher beschrieben wird.

Die Schnittdarstellung in Fig. 2 zeigt einen Schnitt von Schraffurflächenteilen 5a, 5b in einer der Schraffurflächen 2, jeweils im rechten Winkel zur Erstreckungsrichtung der Erhebungen 3a und 3b. Sämtliche Erhebungen 3a und sämtliche Erhebungen 3b sind innerhalb ihrer Schraffurflächenteile 5a, 5b jeweils gleich ausgebildet. Die Erhebungen 3a, 3b erstrecken sich von dem im Wesentlichen ebenen Boden der Vertiefung 1a ausgehend senkrecht nach außen und sind im Querschnitt im Wesentlichen gleichschenkelige Dreiecke mit einer abgeflachten Spitze, welche eine Breite b₁ in der Größenordnung von 0,1 mm aufweist. Die Erhebungen 3a weisen eine Höhe h₁ von 0,15 mm bis 0,6 mm, vorzugsweise bis 0,3 mm, auf und sind mit seitlichen Flankenflächen 6 versehen, die zur Senkrechten auf die Seitenwand 1 unter insbesondere übereinstimmend großen Winkeln α₁ von 35° bis 50°, insbesondere von 45°, verlaufen. Die Erhebungen 3a können an ihrer Basis am Boden der Vertiefungen 1a unmittelbar aneinander anschließen, bei der gezeigten Ausführungsform weisen sie an ihrer Basis einen gegenseitigen Abstand a₁ auf, welcher 0,1 mm bis 0,5 mm betragen kann.

Die Erhebungen 3b weisen eine Höhe h₂ auf, welche insbesondere bis zu 0,8 mm beträgt und um mindestens 0,1 mm größer ist als die Höhe h₁ der Erhebungen 3a. Am Boden der Vertiefungen 1a können die Erhebungen 3b unmittelbar aneinander anschließen oder einen gegenseitigen Abstand a₂ aufweisen, der bis zu 0,3 mm beträgt und vorzugsweise um mindestens 0,1 mm geringer ist als der gegenseitige Abstand a₁ der Erhebungen 3a, wenn diese unter einem Abstand a₁ von mindestens 0,2 mm zueinander angeordnet sind. Die Erhebungen 3b weisen Seitenflanken 7 auf, welche unter insbesondere gleich großen Winkeln α₂ zu einer Senkrechten auf die Seitenwand 1 verlaufen, welcher 15° bis 35° beträgt und um mindestens 10°, insbesondere um mindestens 20°, kleiner ist als der Winkel α₁ der Seitenflanken 6 der Erhebungen 3a.

In den Schraffurflächenteilen 5b sind daher die Erhebungen 3b mit einer größeren Dichte, angeordnet als die Erhebungen 3a in den in Schraffurflächenteilen 5a. Die Dichte der Erhebungen 3b in den Schraffurflächenteilen 5b beträgt insbesondere das 0, 7- bis 3-Fache, vorzugsweise etwa das Doppelte der Dichte der Erhebungen 3a in den Schraffurflächenteilen 5a.

Die Erhebungen 3b können eine Höhe h₂ aufweisen, die der Tiefe der Vertiefungen 1a entspricht, sodass sich die höchsten Stellen der Erhebungen 3b auf dem Niveau der Kanten 4 und demnach niveaugleich mit den an die Schraffurflächen 2 anschließenden glatten Flächenbereichen der Seitenwand 1 befinden.

Innerhalb einer bestimmten Schraffurfläche 2 verlaufen die Erhebungen 3a in den Schraffurflächenteilen 5a zu den Erhebungen 3b in den Schraffurflächenteilen 5b unter einem konstanten Winkel β von 45° bis 135°, bevorzugt von etwa 90°, zueinander.

Die Schraffurflächen 2, die sich jeweils aus mindesten je einem Schraffurflächenteil 5a und je einem Schraffurflächenteil 5b zusammensetzen, können unterschiedliche äußere Gestalt aufweisen, ebenso wie die innerhalb der Schraffurflächen 2 befindlichen Schraffurflächenteile 5a, 5b. Fig. 1 zeigt beispielhaft zwei Schraffurflächen 2, die in Draufsicht dreieckig gestaltet sind, und zwei weitere etwa parallelogrammförmige Schaffurflächen 2, wobei zwischen den Schraffurflächen 2 stegartig glatte Seitenwandbereiche verlaufen, die das Seitenwanddekor mitgestalten.

Bei einer nicht dargestellten Ausführungsvariante kann der gegenseitige Abstand a₁ bzw. a₂ der Erhebungen 3a, 3b in den Schraffurflächenteilen 5a, 5b variiert werden.

Zur Herstellung der Erhebungen in Seitenwänden von Fahrzeugreifen werden die Seitenwandschalen der den Rohreifen vulkanisierenden Vulkanisationsform entsprechend gefräst oder graviert. Insbesondere ein Gravieren mittels Laser gestattet es, sehr feine und klein dimensionierte Strukturen in den Seitenwandschalen herzustellen, die während der Vulkanisation entsprechend ausgestaltete Schraffurflächen in die Seitenwände des Reifens einprägen.

### Bezugsziffernliste

- 1 ...........................: Seitenwand
- 1a..........................: Vertiefung
- 2 ...........................: Schraffurfläche
- 3a, 3b ....................: Erhebung
- 4 ...........................: Kante
- 5a, 5b: Schraffurflächenteil
- 6, 7: Seitenflanke
- α₁, α₂, β .................: Winkel
- a₁, a₂ .....................: Abstand
- b₁ ..........................: Breite
- h₁, h₂ .....................: Höhe

## Patentansprüche

1. Fahrzeugreifen mit einer Seitenwand (1) mit einer dekorativen Seitenwandschraffur aus zumindest einer Schraffurfläche (2), welche zwei voneinander unterschiedlich gestaltete Typen von Schraffurflächenteilen (5a, 5b), einen ersten Typ Schraffurflächenteil (5a) und einen zweiten Typ Schraffurflächenteil (5b), aufweist, wobei in jedem Schraffurflächenteil (5a, 5b) eine Vielzahl von nebeneinander, insbesondere parallel zueinander verlaufenden, im Querschnitt im Wesentlichen dreieckigen Erhebungen (3a, 3b) vorgesehen ist, wobei im ersten Typ Schraffurflächenteil (5a) die Erhebungen (3a) mit einer Dichte verlaufen, die geringer ist als die Dichte der Erhebungen (3b) im zweiten Schraffurflächenteil (5b), wobei die Erhebungen (3a) im ersten Typ Schraffurflächenteil (5a) unter einem Winkel (β) von mindestens 45° zu den Erhebungen (3b) im zweiten Typ Schraffurflächenteil (5b) verlaufen und wobei die Erhebungen (3a, 3b) Seitenflanken (6, 7) aufweisen, welche an den Erhebungen (3b) im zweiten Typ Schraffurflächenteil (5b) zu einer Senkrechten auf die Seitenwand (1) unter einem kleineren Winkel (α₂) verlaufen als an den Erhebungen (3a) im ersten Typ Schraffurflächenteil (5a),
**dadurch gekennzeichnet,**
**dass** im zweiten Typ Schraffurflächenteil (5b) die Erhebungen (3b) eine um mindestens 0,1 mm größere Höhe (h₂) aufweisen als die Erhebungen (3a) im ersten Typ Schraffurflächenteil (5a).

2. Fahrzeugreifen nach Anspruch 1, **dadurch gekennzeichnet, dass** der Winkel (α₂) der Seitenflanken (7) der Erhebungen (3b) im zweiten Typ Schraffurflächenteil (5b) relativ zur Senkrechten auf die Seitenwand (1) um mindestens 10° kleiner ist als der Winkel (α₁) der Seitenflanken (6) der Erhebungen (3a) im ersten Typ Schraffurflächenteil (5a).

3. Fahrzeugreifen nach Anspruch 1 oder 2, **dadurch gekennzeichnet, dass** der Winkel (α₂) der Seitenflanken (7) der Erhebungen (3b) relativ zur Senkrechten auf die Seitenwand (1) im zweiten Typ Schraffurflächenteil (5b) 15° bis 30° beträgt.

4. Fahrzeugreifen nach Anspruch 1 oder 2, **dadurch gekennzeichnet, dass** der Winkel (α₁) der Seitenflanken (6) der Erhebungen (3a) relativ zur Senkrechten auf die Seitenwand (1) im ersten Typ Schraffurflächenteil (5a) 35° bis 50°beträgt.

5. Fahrzeugreifen nach einem der Ansprüche 1 bis 4, **dadurch gekennzeichnet, dass** die Erhebungen (3b) im zweiten Typ Schraffurflächenteil (5b) an ihrer Basis entweder unmittelbar aneinander anschließen oder einen gegenseitigen Abstand (a₂) von bis zu 0,3 mm aufweisen.

6. Fahrzeugreifen nach einem der Ansprüche 1 bis 4, **dadurch gekennzeichnet, dass** die Erhebungen (3a) im ersten Typ Schraffurflächenteil (5a) an ihrer Basis entweder unmittelbar aneinander anschließen oder einen gegenseitigen Abstand (a₁) von bis zu 0,5 mm aufweisen.

7. Fahrzeugreifen nach einem der Ansprüche 1 bis 6, **dadurch gekennzeichnet, dass** die Erhebungen (3b) im zweiten Typ Schraffurflächenteil (5b) eine Höhe (h₂) von maximal 0,8 mm aufweisen.

8. Fahrzeugreifen nach einem der Ansprüche 1 bis 6, **dadurch gekennzeichnet, dass** die Erhebungen (3a) im ersten Typ Schraffurflächenteil (5a) eine Höhe (h₁) von 0,15 mm bis 0,6 mm aufweisen.

9. Fahrzeugreifen nach einem der Ansprüche 1 bis 8, **dadurch gekennzeichnet, dass** innerhalb einer Schraffurfläche (2) der Winkel (β) zwischen den Erhebungen (3a) im ersten Typ Schraffurflächenteil (5a) und den Erhebungen (3b) im zweiten Typ Schraffurflächenteil (5b) bis zu 135°, insbesondere etwa 90°, beträgt.

10. Fahrzeugreifen nach einem der Ansprüche 1 bis 9, **dadurch gekennzeichnet, dass** sich die Schraffurfläche (2) aus zumindest einem Schraffurflächenteil (5a) des ersten Typs und zumindest einem Schraffurflächenteil (5b) des zweiten Typs zusammensetzt.

## Claims

1. Vehicle tyre with a sidewall (1) with a decorative sidewall hatching comprising at least one hatching area (2), which has two differently designed types of hatching area parts (5a, 5b), a first type of hatching area part (5a) and a second type of hatching area part (5b), wherein a plurality of elevations (3a, 3b) which run next to one another, in particular parallel to one another, and are substantially triangular in cross section are provided in each hatching area part (5a, 5b), wherein, in the first type of hatching area part (5a), the elevations (3a) run with a concentration that is less than the concentration of the elevations (3b) in the second hatching area part (5b), wherein the elevations (3a) in the first type of hatching area part (5a) run at an angle (β) of at least 45° in relation to the elevations (3b) in the second type of hatching area part (5b) and wherein the elevations (3a, 3b) have side flanks (6, 7), which run at a smaller angle (α₂) in relation to a perpendicular to the sidewall (1) at the elevations (3b) in the second type of hatching area part (5b) than at the elevations (3a) in the first type of hatching area part (5a),
**characterized**
**in that**, in the second type of hatching area part (5b), the elevations (3b) have a height (h₂) that is greater by at least 0.1 mm than the elevations (3a) in the first type of hatching area part (5a).

2. Vehicle tyre according to Claim 1, **characterized in that** the angle (α₂) of the side flanks (7) of the elevations (3b) in a second type of hatching area part (5b) in relation to the perpendicular to the side wall (1) is less by at least 10° than the angle (α1) of the side flanks (6) of the elevations (3a) in the first type of hatching area part (5a).

3. Vehicle tyre according to Claim 1 or 2, **characterized in that** the angle (α₂) of the side flanks (7) of the elevations (3b) in relation to the perpendicular to the side wall (1) in the second type of hatching area part (5b) is 15° to 30°.

4. Vehicle tyre according to Claim 1 or 2, **characterized in that** the angle (α₁) of the side flanks (6) of the elevations (3a) in relation to the perpendicular to the side wall (1) in the first type of hatching area part (5a) is 35° to 50°.

5. Vehicle tyre according to one of Claims 1 to 4, **characterized in that**, at their base, the elevations (3b) in the second type of hatching area part (5b) either adjoin one another directly or have a mutual spacing (a₂) of up to 0.3 mm.

6. Vehicle tyre according to one of Claims 1 to 4, **characterized in that**, at their base, the elevations (3a) in the first type of hatching area part (5a) either adjoin one another directly or have a mutual spacing (a₁) of up to 0.5 mm.

7. Vehicle tyre according to one of Claims 1 to 6, **characterized in that** the elevations (3b) in the second type of hatching area part (5b) have a height (h₂) of at most 0.8 mm.

8. Vehicle tyre according to one of Claims 1 to 6, **characterized in that** the elevations (3a) in the first type of hatching area part (5a) have a height (h₁) of 0.15 mm to 0.6 mm.

9. Vehicle tyre according to one of Claims 1 to 8, **characterized in that**, within a hatching area (2), the angle (β) between the elevations (3a) in the first type of hatching area part (5a) and the elevations (3b) in the second type of hatching area part (5b) is up to 135°, in particular approximately 90°.

10. Vehicle tyre according to one of Claims 1 to 9, **characterized in that** the hatching area (2) is made up of at least one hatching area part (5a) of the first type and at least one hatching area part (5b) of the second type.

## Revendications

1. Pneumatique de véhicule, comprenant un flanc (1) doté d'une hachure décorative de flanc composée d'au moins une surface hachurée (2) qui présente deux types de parties de surface hachurée (5a, 5b), configurés différemment l'un de l'autre, notamment un premier type de partie de surface hachurée (5a) et un deuxième type de partie de surface hachurée (5b), dans lequel une pluralité de reliefs (3a, 3b) substantiellement triangulaires en section transversale, s'étendant côte à côte, en particulier en parallèle les uns aux autres, est prévue dans chaque partie de surface hachurée (5a, 5b), dans lequel les reliefs (3a) dans le premier type de partie de surface hachurée (5a) s'étendent avec une densité qui est inférieure à la densité des reliefs (3b) dans la deuxième partie de surface hachurée (5b), dans lequel les reliefs (3a) dans le premier type de partie de surface hachurée (5a) s'étendent selon un angle (β) d'au moins 45° par rapport aux reliefs (3b) dans le deuxième type de partie de surface hachurée (5b), et les reliefs (3a, 3b) présentant des flancs latéraux (6, 7) qui s'étendent au niveau des reliefs (3b) dans le deuxième type de partie de surface hachurée (5b) par rapport à la normale au flanc (1) selon un angle inférieur (α₂) à celui au niveau des reliefs (3a) dans le premier type de partie de surface hachurée (5a),
**caractérisé en ce que** les reliefs (3b) présentent dans le deuxième type de partie de surface hachurée (5b) une hauteur (h₂) supérieure d'au moins 0,1 mm à celle des reliefs (3a) dans le premier type de partie de surface hachurée (5a).

2. Pneumatique de véhicule automobile selon la revendication 1, **caractérisé en ce que** l'angle (α₂) des flancs latéraux (7) des reliefs (3b) dans le deuxième type de partie de surface hachurée (5b) par rapport à la normale au flanc (1) est inférieur d'au moins 10° à l'angle (α₁) des flancs latéraux (6) des reliefs (3a) dans le premier type de partie de surface hachurée (5a) .

3. Pneumatique de véhicule selon la revendication 1 ou 2, **caractérisé en ce que** l'angle (α₂) des flancs latéraux (7) des reliefs (3b) par rapport à la normale au flanc (1) dans le deuxième type de partie de surface hachurée (5b) est de 15° à 30°.

4. Pneumatique de véhicule selon la revendication 1 ou 2, **caractérisé en ce que** l'angle (α₁) des flancs latéraux (6) des reliefs (3a) par rapport à la normale au flanc (1) dans le premier type de partie de surface hachurée (5a) est de 35° à 50°.

5. Pneumatique de véhicule selon l'une quelconque des revendications 1 à 4, **caractérisé en ce que** les reliefs (3b) dans le deuxième type de partie de surface hachurée (5b) sont directement adjacents les uns aux autres au niveau de leur base ou présentent une distance mutuelle (a₂) pouvant atteindre 0,3 mm.

6. Pneumatique de véhicule selon l'une quelconque des revendications 1 à 4, **caractérisé en ce que** les reliefs (3a) dans le premier type de partie de surface hachurée (5a) sont directement adjacents les uns aux autres au niveau de leur base ou présentent une distance mutuelle (a₁) pouvant atteindre 0,5 mm.

7. Pneumatique de véhicule selon l'une quelconque des revendications 1 à 6, **caractérisé en ce que** les reliefs (3b) dans le deuxième type de partie de surface hachurée (5b) présentent une hauteur (h₂) d'un maximum de 0,8 mm.

8. Pneumatique de véhicule selon l'une quelconque des revendications 1 à 6, **caractérisé en ce que** les reliefs (3a) dans le premier type de partie de surface hachurée (5a) présentent une hauteur (h₁) de 0,15 mm à 0,6 mm.

9. Pneumatique de véhicule selon l'une quelconque des revendications 1 à 8, **caractérisé en ce que** l'angle (β) entre les reliefs (3a) à l'intérieur d'une surface hachurée (2) dans le premier type de partie de surface hachurée (5a) et les reliefs (3b) dans le deuxième type de partie de surface hachurée (5b) est de 135°, en particulier d'environ 90°.

10. Pneumatique de véhicule selon l'une quelconque des revendications 1 à 9, **caractérisé en ce que** la surface hachurée (2) se compose d'au moins une partie de surface hachurée (5a) du premier type et d'au moins une partie de surface hachurée (5b) du deuxième type.
